(19) Europäisches Patentamt
European Patent Office
Office européen des brevets

(11) **EP 2 834 465 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **12715003.5**

(22) Anmeldetag: **02.04.2012**

(51) Int Cl.:
**E21D 23/12** *(2006.01)*  **G01C 5/04** *(2006.01)*

(86) Internationale Anmeldenummer:
**PCT/EP2012/055990**

(87) Internationale Veröffentlichungsnummer:
**WO 2013/149648 (10.10.2013 Gazette 2013/41)**

(54) **STREBAUSRÜSTUNG MIT ZWISCHEN STREBFÖRDERER UND SCHILDAUSBAUGESTELLEN VERLEGTEN SCHLAUCHWAAGEN**

FACE EQUIPMENT COMPRISING HOSE LEVELS PLACED BETWEEN THE FACE CONVEYOR AND THE SHIELD SUPPORT FRAMES

ÉQUIPEMENT DE TAILLE MUNI DE NIVEAUX À EAU POSÉS ENTRE UN CONVOYEUR DE TAILLE ET DES ÉLÉMENTS DE SOUTÈNEMENT BOUCLIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.02.2015 Patentblatt 2015/07**

(73) Patentinhaber: **Rag Aktiengesellschaft**
**44623 Herne (DE)**

(72) Erfinder:
• **JUNKER, Martin**
**45133 Essen (DE)**

• **MOZAR, Armin**
**59073 Hamm (DE)**

(74) Vertreter: **Müller, Karl-Ernst et al**
**Turmstraße 22**
**40878 Ratingen (DE)**

(56) Entgegenhaltungen:
**WO-A1-2009/103303        WO-A1-2011/144223**
**WO-A1-2012/089230        DE-A1-102009 026 011**
**US-A- 4 452 078**

**Beschreibung**

Die Erfindung betrifft eine Strebausrüstung für die maschinelle Gewinnung im Langfrontbau, insbesondere im untertätigen Steinkohlenbergbau, mit einem längs der Abbaufront angeordneten Strebförderer, einem längs des Strebförderers verfahrbaren Gewinnungsmittel und mit im Winkel zum Strebförderer daran angeschlagenen Schildausbaugestellen.

Eine Strebausrüstung mit den vorgenannten Merkmalen ebenso wie ein Verfahren zum Steuern einer derartigen Strebausrüstung sind in der WO 2009/103303 beschrieben. Hierzu ist in der vorgenannten Schrift im einzelnen dargelegt, dass die Automatisierung einer derartigen Steuerung der Strebausrüstung allgemein von der Kenntnis der Stellung der Strebausrüstung im Raum, insbesondere aber von der Kenntnis der jeweils im Bereich des vorderen Endes der Hangendkappe der Schildausbaugestelle bestehenden Höhe der Streböffnung abhängig ist. Die Ermittlung der betreffenden Basiswerte für die Berechnung der Streböffnungshöhe geschieht diesem Stand der Technik über an den Hauptbestandteilen der einzelnen Schildausbaugestelle wie Bodenkufe, Bruchschild, Traglenkern und Hangendkappe angebrachten Neigungssensoren, mittels derer die Neigung der jeweiligen Bauteile gegen die Vertikale ermittelt wird. Durch Vergleich der aufgenommenen Daten mit in einer Auswerteeinheit abgelegten, die geometrische Ausrichtung der Bauteile des Schildausbaugestells und deren Bewegung während des Schreitens definierenden Basisdaten kann die jeweils bankrechte Höhe des Schildausbaugestells am vorderen Ende von dessen Hangendkappe berechnet werden, die ein Maß für die Höhe der Streböffnung darstellt.

Mit der bekannten Vorgehensweise ist der Nachteil einer aufwendigen Rechenarbeit verbunden, die zudem eine zutreffende Erfassung der für die jeweilige Bauform des eingesetzten Schildausbaugestells geltenden Basisdaten und die Erstellung eines anwendbaren Algorithmus für die Berechnung der bankrechten Höhe des Schildausbaugestells voraussetzt.

Abgesehen von der vorstehend genannten mittelbaren Bestimmung der Höhe der Streböffnung ist eine unmittelbare Erfassung von Höhendaten mittels eines Schlauchwaagensystems beim Vortrieb von Tunneln aus der DE 43 33 032 C2 bekannt. Hierbei ist zwischen der Tunnelvortriebsmaschine und einem Referenzpunkt ein Schlauchwaagesystem angeordnet, dessen geschlossener, flüssigkeitsgefüllter Schlauch mit einem Ende der Referenzhöhe und mit dem anderen Ende zur Bestimmung weiterer Größen der Messhöhe der Tunnelvortriebsmaschine zugeordnet ist.

Schließlich ist aus der WO 2012/089230 A1 (Stand der Technik nach Art. 54(3) EPÜ) eine Strebausrüstung mit wenigstens einer daran verlegten Schlauchwaage bekannt, deren Schlauch sich jeweils über die Länge der Abbaufront erstreckt und jeweils entweder an den Hangendkappen oder den Kufen der Schildausbaugestelle oder an den Rinnen des Strebförderers verlegt ist. Damit soll jeweils die mit Bezug auf einen in einer Abbaubegleitstrecke angeordneten Referenzpunkt absolute Höhenlage der über den Schlauch der Schlauchwaage miteinander verbundenen Elemente der Strebausrüstung ermittelt werden, so dass daraus ein Höhenprofil für die betreffenden Elemente der Strebausrüstung abgeleitet werden kann. Der Erfindung liegt die Aufgabe zugrunde, die Ermittlung der Höhe der Streböffnung bei einer gattungsgemäßen Strebausrüstung zu vereinfachen. Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Ermittlung der Höhe der Streböffnung im Bereich des Strebförderers an einzelnen Schildausbaugestellen eine zwischen dem Strebförderer und einem Bestandteil des Schildausbaugestells verlegte Schlauchwaage mit einem flüssigkeitsgefüllten Schlauch verlegt und an wenigstens einem Ende des Schlauches ein Drucksensor angeordnet ist, wobei zusätzlich zur Berücksichtigung einer Längs- und/oder Querneigung des Strebförderers und des Schildausbaugestells bei der Ermittlung der Strebhöhe an dem Strebförderer und an dem das Ende der Schlauchwaage aufweisenden Bestandteil des Schildausbaugestells jeweils eine die Messung von wenigstens zwei Kippachsen gegen die Horizontale ermöglichende Neigungsmessanordnung angeordnet ist und Drucksensor und Neigungsmessanordnungen mit einer Auswerte- und Steuereinheit verbunden sind.

Mit der Erfindung ist der Vorteil verbunden, dass mit der an einzelnen Schildausbaugestellen oder auch an jedem Schildausbaugestell anordneten und zum Strebförderer führenden Schlauchwaage der Höhenabstand zwischen Strebförderer und damit auch der an dem Strebförderer beführten Gewinnungsmaschine und einem Bestandteil des Schildausbaugestells ermittelt und unter Berücksichtigung der geometrisch festliegenden Lage der Schlauchenden an dem Strebförderer und dem Bestandteil des Schildausbaugestells der Abstand zwischen der Unterkante des Strebförderers und der Oberkante der Hangendkappe als Höhe der Streböffnung oder Strebhöhe berechnet werden kann. Da an dem Strebförderer und dem betreffenden Bestandteil des Schildausbaugestells erfindungsgemäß Neigungsmessanordnungen angeordnet sind, liefern diese zusätzliche Informationen über die Querneigung und die Längsneigung sowohl des Strebförderers als auch des betreffenden Schildausbaugestells und damit über die Stellung dieser Bauteile im Raum. Somit kann das Ergebnis der Höhenermittlung zwischen Strebförderer und Hangendkappe unter Anwendung der trigonometrischen Rechenformeln in die bankrechte Höhe der Streböffnung zwischen dem Hangendem und dem Liegenden umgerechnet werden.

Dabei ist in einer ersten, den vorstehend erläuterten Grundgedanken der Erfindung verwirklichenden Ausführungsform der Erfindung vorgesehen, dass sich der Schlauch der Schlauchwaage zwischen dem Strebförderer und der Hangendkappe des Schildausbaugestells erstreckt, so dass der Abstand zwischen dem Strebförderer und der Hangendkappe unmittelbar erfassbar ist.

Dabei kann in einem ersten Ausführungsbeispiel der Schlauch der Schlauchwaage von dem Strebförderer unmittelbar zur Hangendkappe geführt sein, so dass der Schlauch von seiner Anbindung an dem Strebförderer in einem freien Verlauf unmittelbar bis zur Hangendkappe verläuft, wobei dann im Hinblick auf die Gewinnung zusätzlicher Messwerte zur Verbesserung der Berechnungsgrundlage vorgesehen sein kann, dass sich der zwischen Strebförderer und Hangendkappe des Schildausbaugestells verlaufende Schlauch über einen aus hangendkappenseitigen Ende des Schlauches angebrachten Drucksensor hinaus bis zur Bodenkufe des Schildausbaugestells erstreckt und an dem an der Bodenkufe befestigten Ende des Schlauches ein Drucksensor angeordnet ist.

Bei einer alternativen Verlegung der Schlauchwaage kann der Schlauch auch von dem Strebförderer über die Bodenkufe des Schildausbaugestells und längs einem weiteren Bestandteil wie Stempel oder Bruchschild bis zur Hangendkappe geführt sein.

Soweit bei dieser Schlauchführung vorgesehen sein kann, dass in den Verlauf des Schlauches zwischen Strebförderer und Hangendkappe im Bereich der Bodenkufe des Schildausbaugestells ein Drucksensor eingeschaltet ist, können zwei Höhendifferenzen erfasst werden, nämlich zum einen die Höhendifferenz zwischen dem Strebförderer und der Bodenkufe des Schildausbaugestells und zum anderen die Höhendifferenz zwischen der Bodenkufe und der Hangendkappe des Schildausbaugestells. Insofern sind die Grundlagen für die Berechnung der bankrechten Strebhöhe noch verbessert.

Soweit ein von dem Strebförderer über die Bodenkufe des Schildausbaugestells bis zu dessen Hangendkappe durchgehender Schlauch Probleme beim Ablauf der Gewinnungsarbeit verursachen kann, ist nach einem Ausführungsbeispiel der Erfindung vorgesehen, dass zwischen dem Strebförderer und der Bodenkufe des Schildausbaugestells einerseits und zwischen der Bodenkufe und der Hangendkappe des Schildausbaugestells andererseits jeweils eine Schlauchwaage mit einem flüssigkeitsgefüllten Schlauch und an dessen beiden Enden angeordneten Drucksensoren angeordnet ist, wobei der bodenkufenseitige Drucksensor des zwischen Strebförderer und Bodenkufe verlaufenden Schlauches und der bodenkufenseitige Drucksensor des zwischen Bodenkufe und Hangendkappe des Schildausbaugestell verlaufenden Schlauches eine höhengleiche Koppelstelle bilden.

Bei einem entsprechenden Ausführungsbeispiel zur ersten Ausführungsform der Erfindung kann auch bei einem von dem Strebförderer unmittelbar zur Hangendkappe des Schildausbaugestells und dann weiter bis zu dessen Bodenkufe verlegten Schlauch der Schlauchwaage vorgesehen sein, dass zwischen dem Strebförderer und der Hangendkappe des Schildausbaugestells einerseits und zwischen der Hangendkappe und der Bodenkufe des Schildausbaugestells andererseits jeweils eine Schlauchwaage mit einem flüssigkeitsgefüllten Schlauch und an dessen beiden Enden angeordneten Drucksensoren angeordnet ist, wobei der hangendkappenseitige Drucksensor des zwischen Strebförderer und Hangendkappe verlaufenden Schlauches und der hangendkappenseitige Drucksensor des zwischen Hangendkappe und Bodenkufe des Schildausbaugestells verlaufenden Schlauches eine höhengleiche Koppelstelle bilden.

In einer alternativen, auf dem eingangs genannten Grundgedanken der Erfindung beruhenden Ausführungsform der Erfindung kann vorgesehen sein, dass sich der Schlauch der Schlauchwaage zwischen dem Strebförderer und der Bodenkufe des Schildausbaugestells erstreckt, so dass lediglich eine Höhendifferenz zwischen dem Strebförderer und der Bodenkufe erfasst wird. Soweit in diesem Fall zusätzlich die Höhe des ausgefahrenen Schildausbaugestells in die Ermittlung der Strebhöhe einzubeziehen ist, ist erfindungsgemäß vorgesehen, dass an wenigstens drei der vier Hauptbestandteile jedes Schildausbaugestells wie Bodenkufe, Bruchschild, Traglenkern und Hangendkappe Neigungsmessanordnungen zur Erfassung der jeweiligen Neigung des Hauptbestandteils gegen die Horizontale als Grundlage einer Berechnung der bankrechten Höhe des Schildausbaugestells an dem vorderen

Ende der Hangendkappe durch Vergleich der Messdaten mit den in der Auswerte- und Steuereinheit abgelegten, die geometrische Ausrichtung der Bauteile und deren Bewegung während des Schreitens definierenden Basisdaten angeordnet sind. Eine derartige Vorgehensweise mit einer rechnerischen Ermittlung der ausgefahrenen Höhe des Schildausbaugestells ist aus der WO 2009/103303 A1 bekannt.

Nach einem ersten Ausführungsbeispiel der Erfindung ist hinsichtlich der Ausführung der Schlauchwaage bei beiden Ausführungsformen der Erfindung vorgesehen, dass die Schlauchwaage als geschlossene Schlauchwaage mit einem beidseitig geschlossenen, druckbefüllten und an einen Druckspeicher angeschlossenen Schlauch ausgebildet ist. Der Vorteil einer beidseitig geschlossenen Schlauchwaage besteht im wesentlichen darin, dass eine barometrische Korrektur nicht erforderlich ist, und dass wegen des erhöhten Druckniveaus in dem druckbefüllten Schlauch ausgasungsbedingte Dichteveränderungen der Flüssigkeit (beispielsweise gelöste Luft) eine geringere und damit vernachlässigbare Rolle spielen. Ein Nachteil der geschlossenen Schlauchwaage besteht beispielsweise darin, dass die in dem Schlauch enthaltene Flüssigkeit vollständig gekammert ist. Damit kann sich aufgrund von Verdrückungen oder Temperaturveränderungen des

Schlauches wie auch der Flüssigkeit das Druckniveau ändern. Um diesen Einfluss zu minimieren, ist an dem Schlauch eine vorgespannte Druckspeicherblase mit einem gegen die Flüssigkeitssäule wirkenden vorgespannten Gas angeschlossen. Hierdurch werden auch hydraulische Druckschwankungen beispielsweise durch Vibrationen gedämpft und zugleich werden die Drucksensoren vor möglichen Druckspitzen geschützt. Damit kann auch der Messbereich der Drucksensoren zugunsten der Messgenauigkeit verringert werden.

Alternativ kann vorgesehen sein, dass die Schlauchwaage als einseitig offene Schlauchwaage mit einem an einen den höchsten Punkt der Schlauchnwaage bildenden Überlauf, beispielsweise in Form eines entsprechend angeordneten Überlaufbeckens, angeschlossenen Schlauch ausgebildet ist. Dabei bestehen die Vorteile einer derartigen, einseitig offenen Schlauchwaage darin, dass eine einfache hydrostatische Druck-/Höhenbestimmung gegeben ist. Eine Beeinflussung der Messung durch Schlauchverdrückungen oder temperaturinduzierte Innendruckveränderungen ist ausgeschlossen, und es ist auch nur eine geringe Empfindlichkeit gegen dynamische Einflüsse in Form von mechanischen Schwingungen gegeben. Nachteilig ist, dass für Präzisionsmessungen eine barometrische Korrektur erforderlich ist. Außerdem können sich in der Anordnung der offenen Schlauchwaage im Schildausbaugestell Anordnungsprobleme ergeben, da das offene Ende des Schlauches mit dem Überlaufbecken immer an der höchsten Stelle liegen muss. Bei in untertägigen Abbaubetrieben nicht auszuschließenden wechselnden Einsatzbedingungen kann dies Umbaumaßnahmen erfordern. Auch ist ein Überlauf der Schlauchwaage bzw. eine Nachbefüllung sicherzustellen, um ein ordnungsgemäßes Arbeiten der Schlauchwaage zu erreichen.

Nach einem Ausführungsbeispiel der Erfindung kann vorgesehen sein, dass der am zugeordneten Ende des Schlauches angeordnete Drucksensor jeweils ein Absolutdrucksensor ist.

Um die Genauigkeit der Druckmessung zu verbessern und systembedingte Fehler zu minimieren, kann nach einem Ausführungsbeispiel der Erfindung vorgesehen sein, dass sowohl am strebfördererseitigen wie auch am hangendkappenseitigen Ende des Schlauches jeweils ein Drucksensor angeordnet ist. In einem solchen Zweisensorensystem kann anhand der Differenz der angezeigten Drücke auf die hydrostatische Höhendifferenz geschlossen werden. Dabei ist mit einem Zweisensorsystem der Vorteil verbunden, dass aufgrund der Verwendung der Differenz der angezeigten Drücke eine barometrische Korrektur bei atmosphärischen Luftdruckänderungen möglich ist. Da die Höhe anhand des Differenzdruckes beider Sensoren abgeleitet wird, kann auch bei Schlauchinnendruckveränderungen, beispielsweise aufgrund einer Schlauchbiegung oder Schlauchverdrückung, anhand der gemessenen Druckdifferenz die Höhendifferenz fehlerarm gemessen werden.

Dabei kann nach einem Ausführungsbeispiel der Erfindung vorgesehen sein, dass auch der am hangendkappenseitigen Ende des Schlauches angeordnete Drucksensor ein Absolutdrucksensor ist.

Soweit Absolutdrucksensoren im Vergleich mit ebenfalls bekannten Relativdrucksensoren etwas ungenauer in ihren Messergebnissen und auch teurer in der Anschaffung sind, können bei Einsatz von zwei Drucksensoren auch Relativdrucksensoren als Drucksensoren eingesetzt werden, die jeweils den Atmosphärendruck gegen den Flüssigkeitsdruck messen.

Um einen bewegungstechnischen Spielraum hinsichtlich des zwischen Strebförderer und Schildausbaugestell, und zwar entweder dessen Hangendkappe oder dessen Bodenkufe, verlaufenden Schlauches bei den Schreitbewegungen des Schildausbaugestells gegenüber dem Strebförderer auszugleichen, kann vorgesehen sein, dass der zwischen Strebförderer und Schildausbaugestell verlaufende Schlauch von einer Rückholfeder beaufschlagt ist.

Nach einem Ausführungsbeispiel der Erfindung kann vorgesehen sein, dass eine am gleichen Bauteil des Schildausbaugestells angeordnete Neigungsmessanordnung und ein Drucksensor jeweils in einem gemeinsamen Sensorgehäuse mit gemeinsamer Stromversorgung und Messleitungsanschluss angeordnet sind.

Nach einem Ausführungsbeispiel der Erfindung ist vorgesehen, dass an der Bodenkufe des Schildausbaugestells eine Neigungsmessanordnung angeordnet ist.

Nach alternativen Ausführungsbeispielen der Erfindung kann die jeweils vorgesehene Neigungsmessanordnung aus zwei einaxialen Neigungssensoren oder jeweils aus einem zweiaxialen Neigungssensor bestehen. Auch der Einsatz eines an sich bekannten dreiaxialen Neigungssensors ist möglich, auch soweit die Messergebnisse lediglich bezüglich zweier Kippachsen benötigt werden.

In der Zeichnung sind Ausführungsbeispiele der Erfindung wiedergegeben, welche nachstehend beschrieben sind. Es zeigen:

Fig. 1a    eine aus Strebförderer, darauf fahrender Gewinnungsmaschine und angeschlossenen Schildausbaugestellen bestehende Strebausrüstung mit einer zwischen Strebförderer und Hangendkappe des Schildausbaugestells verlegten Schlauchwaage in einer schematischen Seitenansicht,

Fig. 1b    den Gegenstand der Figur 1a in Vorderansicht, unter Weglassung der auf dem Strebförderer geführten Gewinnungsmaschine,

Fig. 2    den Gegenstand der Figur 1a mit einer zusätzlich von der Hangendkappe zur Bodenkufe des Schildausbaugestells weitergeführten Schlauchwaage,

Fig. 3    eine andere Ausführungsform der Strebausrüstung gemäß Figur 1a bzw. 2 mit einer vom Strebförderer über die Bodenkufe des Schildausbaugestells bis zu dessen Hangendkappe verlegten Schlauchwaage,

Fig. 4    den Gegenstand der Figur 3 bzw. Figur 1a in wiederum einer anderen Ausführungsform,

Fig. 5    eine alternative Ausführungsform der Strebausrüstung gesäß Fig. 1a mit einer zwischen Strebförderer und Bodenkufe des Schildausbaugestells verlegten Schlauchwaage und an dem Schildausbaugestell zur rechnerischen Ermittlung von dessen ausgefahrener Höhe angeordneten Neigungssensoren

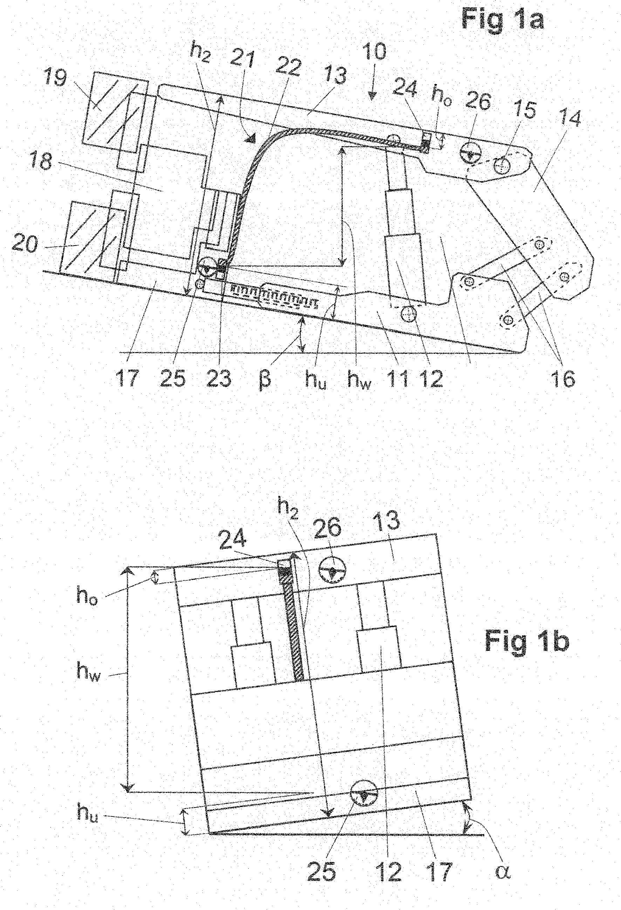

Die in Figur 1a schematisch dargestellte Strebausrüstung umfasst zunächst ein Schildausbaugestell 10 mit einer Bodenkufe 11, auf der in paralleler Anordnung zwei Stempel 12 angesetzt sind, von denen in Figur 1a, nur ein Stempel erkennbar ist und die an ihrem oberen Ende eine Hangendkappe 13 tragen. An dem hinteren (rechten) Ende der Hangendkappe 13 ist ein Bruchschild 14 mittels eines Gelenks 15 angelenkt, wobei das Bruchschild 14 von in der Seitenansicht zwei auf der Bodenkufe, 11 ruhenden Traglenkern 16 gestützt ist. Mit ihrem vorderen (linken) Ende ragt die Hangendkappe 13 über einen Strebförderer 17 vor, auf dem eine als Walzenschrämlader ausgebildete Gewinnungsmaschine 18 mit einer Hangendwalze 19 und mit einer Liegendwalze 20 verfahrbar ist.

Zwischen dem Strebförderer 17 und der Hangendkappe 13 des Schildausbaugestells 10 ist eine Schlauchwaage 21 mit einem zwischen dem Strebförderer, 17 und der Hangendkappe 13 frei verlegten Schlauch 22 angeordnet, dessen unteres Ende an dem Strebförderer 17 und dessen oberes Ende an der Hangendkappe 13 angeordnet ist. An beiden Enden des Schlauches 22 sind jeweils Drucksensoren angeordnet, und zwar an dem an dem Strebförderer 17 angeordneten Ende des Schlauches 22 ein unterer Drucksensor 23 und an dem an der Hangendkappe 13 angeordneten Ende des Schlauches 22 ein oberer Drucksensor 24.

Bei dem dargestellten Ausführungsbeispiel ist die Schlauchwaage 21 als geschlossene Schlauchwaage mit einem geschlossenen, mit einer geeigneten Flüssigkeit druckbefüllten Schlauch 22 ausgebildet, der zudem in einer nicht dargestellten, jedoch vorteilhaften Weise an einen Druckspeicher, beispielsweise in Form einer Druckspeicherblase angeschlossen ist. Als Flüssigkeit ist der Einsatz einer Flüssigkeit anzustreben, die nur wenig Gas aufnehmen bzw. lösen kann. Der Einfachheit halber geht das Ausführungsbeispiel von der Befüllung des Schlauchs 22 mit Wasser aus, welches zudem im Bereich der Strebausrüstung aus einer Strebbedüsung zur Verfügung steht. Mittels der beiden entweder als Absolutdrucksensoren oder auch als den Atmosphärendruck gegen den Flüssigkeitsdruck messende Relativdrucksensoren ausgebildeten Drucksensoren 23 und 24 lässt sich die Höhe der Flüssigkeitssäule $h_w$ unabhängig von der Verlegungslänge des Schlauches 22 unmittelbar bestimmen. Soweit das obere Ende des Schlauches 22 mit dem daran angeordneten oberen Drucksensor 24 einen Abstand $h_o$ von der Oberkante der Hangendkappe 13 einhält und entsprechend das untere Ende des Schlauches 22 mit dem daran angeordneten unteren Drucksensor 23 einen Abstand $h_u$ von der Unterkante der Bodenkufe 11 einhält, ergibt sich im Bereich der Schlauchwaage 21 die Gesamthöhe des Schildausbaugestells mit

$$h_2 = h_u + h_o + h_w.$$

Soweit jeweils die bankrechte Höhe der Streböffnung als Strebhöhe im Bereich des Strebförderers als senkrechter Abstand zwischen der Oberkante der Hangendkappe und der Unterkante des Strebförderers zu ermitteln ist, entspricht bei einer waagerechten Stellung der Strebausrüstung diese bankrechte Höhe auch der messbaren Höhe der Flüssigkeitssäule. In der Praxis kommt es jedoch zu von der waagerechten Idealstellung der Strebausrüstung abweichenden Stellungen der Strebausrüstung im Strebraum, wodurch die bankrechte Strebhöhe von der ausschließlich als vertikaler Abstand der Drucksensoren 23, 24 voneinander messbaren Höhe der Wassersäule der Schlauchwaage 21 abweicht. Daher muss diese Höhe der Wassersäule $h_w$ unter Berücksichtigung von Längsneigungen oder Querneigungen des Schildausbaugestells 10 einschließlich des Strebförderers 17 in die jeweils bankrechte Höhe $h_2$ umgerechnet werden. Zur Ermittlung von für diese Umrechnung erforderlichen Daten ist bei dem dargestellten Ausführungsbeispiel sowohl an der Hangendkappe 13 als auch an dem Strebförderer 17 jeweils eine Neigungsmessanordnung 25 bzw. 26 angebracht, die wahlweise aus zwei einaxialen Neigungssensoren, einem zweiaxialen oder auch einem dreiaxialen Neigungssensor besteht. Wichtig ist, dass die jeweils eingesetzte Neigungsmessanordnung eine Messung von wenigstens zwei Kippachsen gegen die Horizontale ermöglicht.

Bei dem in Figur 1a dargestellten Ausführungsbeispiel ist eine durch den Winkel $\beta$ verdeutlichte Längsneigung der Strebausrüstung angenommen, wobei gleichzeitig entsprechend der Vorderansicht der Strebausrüstung in Figur 1b eine Querneigung der Strebausrüstung entsprechend Winkel $\alpha$ angenommen ist. Der Übersichtlichkeit halber ist in Figur 1b die Darstellung der in Figur 1a angedeuteten Gewinnungsmaschine weggelassen. Bei einer derartigen Lage der Strebausrüstung im Raum ergibt sich die bankrechte Höhe $h_2$ als Strebhöhe zu

$$h_2 = h_u + h_o + h_w \,/\, (\cos \alpha \cdot \cos \beta).$$

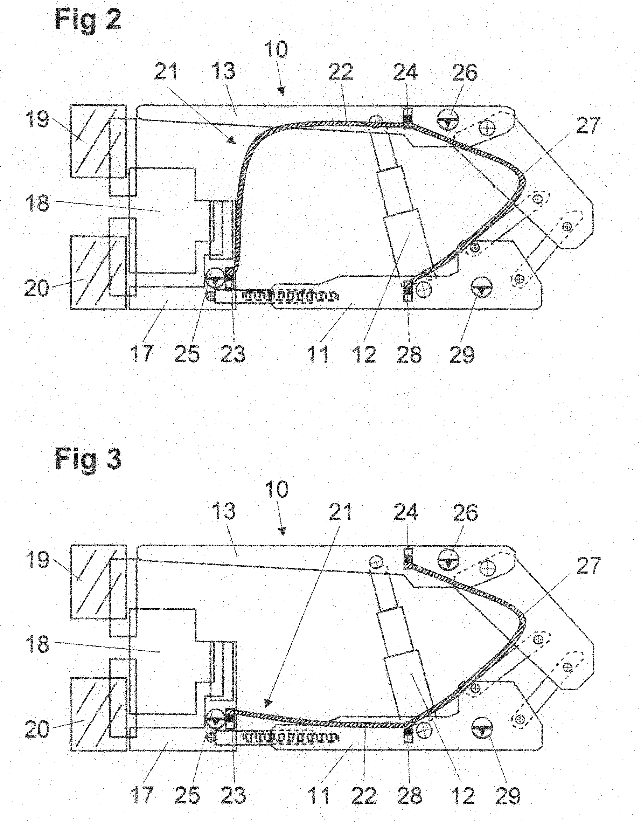

Bei dem in Figur 2 dargestellten Ausführungsbeispiel ist der Schlauch 22 der Schlauchwaage 21 über den hangendkappenseitigen oberen Drucksensor 24 hinaus mit einem Schlauchast 27 bis zur Bodenkufe 11 des Schildausbaugestells 10 geführt, wobei das untere Ende des Schlauchastes 27 an der Bodenkufe 11 befestigt ist. Entsprechend ist an dem bodenkufenseitigen Ende des Schlauchastes 27 ebenfalls ein Drucksensor 28 angeordnet. Im Hinblick auf die vorzunehmende Lagekorrektur ist entsprechend an der Bodenkufe 11 des Schildausbaugestells 10 auch eine Neigungsmessanordnung 29 angebracht. Mit diesem Ausführungsbeispiel lässt sich zusätzlich zu dem Abstand zwischen Strebförderer 17 und Hangendkappe 13 auch die ausgefahrene Höhe des Schildausbaugestells 10 bestimmen, was für die Berücksichtigung einer eventuellen abgewinkelten Lage des Strebförderers 17 zu der Bodenkufe 11 des Schildausbaugestells 10 und damit zu dessen Stellung im Raum maßgeblich sein kann.

Das in Figur 3 dargestellte Ausführungsbeispiel unterscheidet sich von dem zu Figuren 1a und 2 beschriebenen Ausführungsbeispiel lediglich durch eine andere Verlegung des Schlauches 22 der wiederum zwischen dem Strebförderer 17 und der Hangendkappe 13 des Schildausbaugestells 10 verlegten Schlauchwaage 21. Hierbei ist der Schlauch 22 vom Strebförderer 17 über die Bodenkufe 11 des Schildausbaugestells 10 und den Bruchschild 14 bis zur Hangendkappe 13 geführt. Ansonsten ergeben sich die gleichen Verhältnisse, wie insbesondere zu Figur 2 beschrieben.

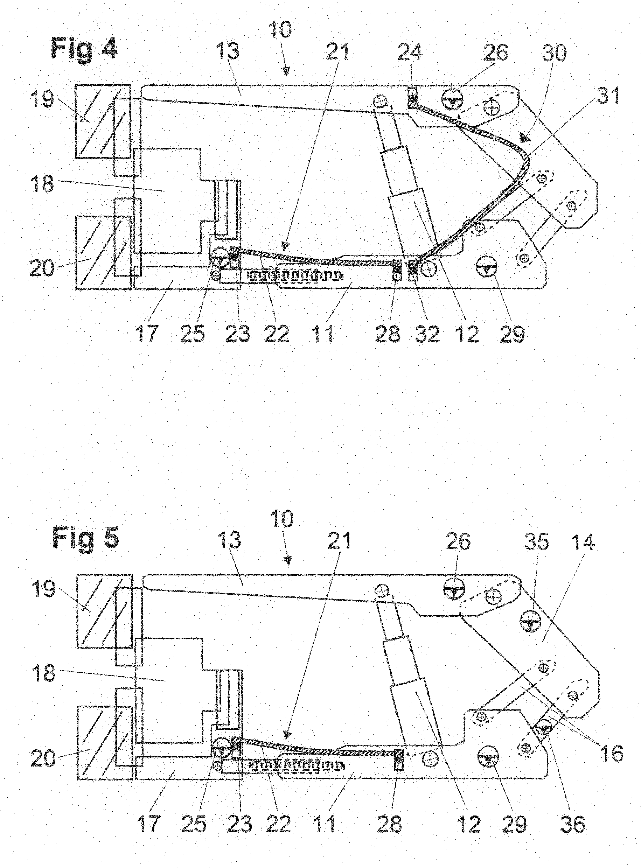

Um eventuelle Reparaturen der zwischen Strebförderer 17 und Hangendkappe 13 des Schildausbaugestells 10 verlegten Schlauchwaage 21 zu erleichtern, ist die zu Figur 3 beschriebene Schlauchführung bei dem in Figur 4 dargestellten Ausführungsbeispiel in zwei getrennte Schlauchwaagen aufgelöst, wobei neben der zwischen dem Strebförderer 17 und der Bodenkufe 11 als dem zugeordneten Hauptbestandteil des Schildausbaugestells 10 verlegten Schlauchwaage 21 auch eine unabhängige Schlauchwaage 30 zwischen der Bodenkufe 11 und der Hangendkappe 13 des Schildausbaugestells 10 mit einem Schlauch 31 verlegt ist. Soweit an dem an der Bodenkufe 11 angeordneten Ende des Schlauches 22 der Schlauchwaage 21 wiederum ein Drucksensor 28 angeordnet ist, ist am unteren Ende des Schlauches 31 der zweiten Schlauchwaage 30 ebenfalls ein Drucksensor 32 angeordnet. Dabei ist dafür Sorge zu tragen, dass die an den Enden von Schlauch 22 und Schlauch 31 jeweils an der Bodenkufe 11 angebrachten Drucksensoren 28 und 32 eine höhengleiche Koppelstellung bilden. Mit dieser Ausführungsform ist der Vorteil verbunden, dass insbesondere wegen der besonderen Beanspruchung des zwischen Strebförderer 17 und Bodenkufe 11 verlaufenden Schlauches 22 durch die im Betrieb der Strebausrüstung ständig wiederkehrenden Relativbewegungen zwischen Schildausbaugestell 10 und Strebförderer 17 die Schlauchwaage 21 mit zugehörigem Schlauch 22 leicht auswechselbar ist, ohne dass die weitere, am Schildausbaugestell 10 verlegte Schlauchwaage 30 berührt ist, so dass eine Höhenmessung an dieser Stelle nicht unterbrochen werden muss.

Wie nicht weiter dargestellt, kann auch bei einer gemäß Figur 2 verwirklichten Schlauchführung zwischen dem Strebförderer 17 und der Hangendkappe 13 und zwischen der Hangendkappe 13 und der Bodenkufe 11 jeweils eine getrennte Schlauchwaage angeordnet sein, deren an der Hangendkappe 13 angeordneten Drucksensoren eine höhengleiche Koppelstelle bilden.

In Figur 5 ist ein anderes Ausführungsbeispiel der Erfindung dargestellt, bei welchem sich die Anordnung einer Schlauchwaage auf deren Verlegung zwischen dem Strebförderer 17 und der Bodenkufe 11 des Schildausbaugestells 10 beschränkt. Insofern ist die Hangendkappe 13 des Schildausbaugestells 10 nicht in die unmittelbare Höhenerfassung mittels Schlauchwaage einbezogen, vielmehr erfolgt die Bestimmung der Höhe des ausgefahrenen Schildausbaugestells 10 in einer aus der WO2009/103303 A1 an sich bekannten Weise, indem an wenigstens drei der vier Hauptbauteile jedes Schildausbaugestells 10 wie Bodenkufe 11, Bruchschild 14, Traglenkern 16 bzw. Hangendkappe 13 Neigungssensoren 29 bzw. 35 bzw. 36 bzw. 26 angebracht sind, mittels derer die Neigung der jeweiligen Schildbestandteile gegen die Horizontale in Schreitrichtung ermittelt wird. Aus den insoweit gemessenen Daten wird die jeweils bankrechte Höhe des Schildausbaugestells 10 an dem vorderen Ende der Hangendkappe 13 in einer Rechnereinheit durch Vergleich mit darin abgelegten, die geometrische Ausrichtung der Bauteile und deren Bewegung während des Schreitens definierenden Basisdaten berechnet. Insoweit steht die ausgefahrene Höhe des Schildausbaugestells 10 als Maß für die Höhe der Streböffnung zur Verfügung, wobei die Höhenlage des Strebförderers 17 in Bezug auf die Lage des Schildausbaugestells 10 im Raum mittels der über die Schlauchwaage 21 vorgenommenen Höhenbestimmung erfassbar und in die Ermittlung der Strebhöhe einrechenbar ist.

Die in der vorangehenden Beschreibung oder in den nachstehenden Ansprüchen oder auf den beiliegenden Zeichnungen dargelegten Merkmale, in ihren spezifischen Formen oder im Sinne eines Mittels zur Durchführung der dargelegten Funktion oder einer Methode oder eines Prozesses zum Erreichen des dargelegten Ergebnisses ausgedrückt, können getrennt oder in einer beliebigen Kombination dieser Merkmale zur Durchführung der Erfindung in ihren verschiedenen Formen verwendet werden.

**Patentansprüche**

1. Strebausrüstung für die maschinelle Gewinnung im Langfrontbau, insbesondere im untertägigen Steinkohlenbergbau, mit einem längs der Abbaufront angeordneten Strebförderer (17), einem längs des Strebförderers (17) verfahrbaren Gewinnungsmittel (18) und mit im Winkel zum Strebförderer (17) daran angeschlagenen Schildausbaugestellen (10), **dadurch gekennzeichnet, dass** zur Ermittlung der Höhe der Streböffnung im Bereich des Strebförderers (17) an einzelnen Schildausbaugestellen (10) eine zwischen dem Strebförderer (17) und der Hangendkappe (13) des Schildausbaugestells (10) verlegte Schlauchwaage (21) mit einem flüssigkeitsgefüllten Schlauch (22) verlegt und an wenigstens einem Ende des Schlauches (22) ein Drucksensor (23, 24, 28) angeordnet ist, wobei zusätzlich zur Berücksichtigung einer Längs- und/oder Querneigung des Strebförderers (17) und des Schildausbaugestells (10) bei der Ermittlung der Strebhöhe an dem Strebförderer (17) und an der das Ende der Schlauchwaage aufweisenden Hangendkappe (13) des Schildausbaugestells (10) jeweils eine die Messung von wenigstens zwei Kippachsen gegen die Horizontale ermöglichende Neigungsmessanordnung (25, 26) angeordnet ist und Drucksensor (23, 24, 28) und Neigungsmessanordnungen (25, 26) mit einer Auswerte- und Steuereinheit verbunden sind.

2. Strebausrüstung nach Anspruch 1, **dadurch gekennzeichnet, dass** der Schlauch (22) der Schlauchwaage (21) von dem Strebförderer (17) unmittelbar zur Hangendkappe (13) geführt ist.

3. Strebausrüstung nach Anspruch 2, **dadurch gekennzeichnet, dass** sich der zwischen Strebförderer (17) und Hangendkappe (13) des Schildausbaugestells (10) verlaufende Schlauch (22) über einen am hangendkappenseitigen Ende des Schlauches (22) angebrachten Drucksensor (24) hinaus bis zur Bodenkufe (11) des Schildausbaugestells (10) erstreckt und an dem an der Bodenkufe (11) befestigten Ende des Schlauches (22) ein Drucksensor (28) angeordnet ist.

4. Strebausrüstung nach Anspruch 1, **dadurch gekennzeichnet, dass** der Schlauch (22) der Schlauchwaage (21) von dem Strebförderer (17) über die Bodenkufe (11) des Schildausbaugestells (10) und längs dessen weiterer Bestandteile bis zur Hangendkappe (13) geführt ist.

5. Strebausrüstung nach Anspruch 4, **dadurch gekennzeichnet, dass** in den Verlauf des Schlauches (22) zwischen Strebförderer (17) und Hangendkappe (13) im Bereich der Bodenkufe (11) des Schildausbaugestells (10) ein Drucksensor (28) eingeschaltet ist.

6. Strebausrüstung nach Anspruch 1, **dadurch gekennzeichnet, dass** zwischen dem Strebförderer (17) und der Bodenkufe (11) des Schildausbaugestells (10) einerseits und zwischen der Bodenkufe (11) und der Hangendkappe (13) des Schildausbaugestells (10)andererseits jeweils eine Schlauchwaage (21, 30) mit einem flüssigkeitsgefüllten Schlauch (22, 31) und an dessen beiden Enden angeordneten Drucksensoren (23, 28; 32, 24) angeordnet ist, wobei der bodenkufenseitige Drucksensor (28) des zwischen Strebförderer (17) und Bodenkufe (11) verlaufenden Schlauches (22) und der bodenkufenseitige Drucksensor (32) des zwischen Bodenkufe (11) und Hangendkappe (13) des Schildausbaugestells (10) verlaufenden Schlauches (31) eine höhengleiche Koppelstelle bilden.

7. Strebausrüstung nach Anspruch 1, **dadurch gekennzeichnet, dass** zwischen dem Strebförderer (17) und der Hangendkappe (13) des Schildausbaugestells (10) einerseits und zwischen der Hangendkappe (13) und der Bodenkufe (11) des Schildausbaugestells (10) andererseits jeweils eine Schlauchwaage mit einem flüssigkeitsgefüllten Schlauch und an dessen beiden Enden angeordneten Drucksensoren angeordnet ist, wobei der hangendkappenseitige Drucksensor des zwischen Strebförderer und Hangendkappe verlaufenden Schlauches und der hangendkappenseitige Drucksensor des zwischen Hangendkappe und Bodenkufe des Schildausbaugestells verlaufenden Schlauches eine höhengleiche Koppelstelle bilden.

8. Strebausrüstung für die maschinelle Gewinnung im Langfrontbau, insbesondere im untertägigen Steinkohlenbergbau, mit einem längs der Abbaufront angeordneten Strebförderer (17), einem längs des Strebförderers (17) verfahrbaren Gewinnungsmittel (18) und mit im Winkel zum Strebförderer (17) daran angeschlagenen Schildausbaugestellen (10), **dadurch gekennzeichnet, dass** zur Ermittlung der Höhe der Streböffnung im Bereich des Strebförderers (17) an einzelnen Schildausbaugestellen (10) eine Schlauchwaage (21) verlegt ist, deren Schlauch (22) sich zwischen dem Strebförderer (17) und der Bodenkufe (11) des Schildausbaugestells (10) erstreckt und an wenigstens einem Ende des Schlauches (22) ein Drucksensor (23, 28) angeordnet ist und dass an wenigstens drei der vier Hauptbestandteile jedes Schildausbaugestells (10) wie Bodenkufe (11), Bruchschild (14), Traglenkern (16) und Hangendkappe (13) Neigungsmessanordnungen (29, 35, 36, 26) zur Erfassung der jeweiligen Neigung des Hauptbestandteils gegen die Horizontale als Grundlage einer Berechnung der bankrechten Höhe des Schildausbaugestells (10) an dem vorderen Ende der Hangendkappe (13) durch Vergleich der Messdaten mit den in der Auswerte- und Steuereinheit abgelegten, die geometrische Ausrichtung der Bauteile und deren Bewegung während des Schreitens definierenden Basisdaten angeordnet sind, wobei zusätzlich zur Berücksichtigung einer Längs- und/oder Querneigung des Strebförderers (17) und des Schildausbaugestells (10) bei der Ermittlung der Strebhöhe an dem Strebförderer (17) und an der das Ende der Schlauchwaage aufweisenden Bodenkufe (11) des Schildausbaugestells (10) jeweils eine die Messung von wenigstens zwei Kippachsen gegen die Horizontale ermöglichende Neigungsmessanordnung (25, 29) angeordnet ist und Drucksensor (23, 28) und Neigungsmessanordnungen (25, 29) mit einer Auswerte- und Steuereinheit verbunden sind.

9. Strebausrüstung nach einem der Ansprüche 1 bis 8, **dadurch gekennzeichnet, dass** die Schlauchwaage (21, 30) als geschlossene Schlauchwaage mit einem beidseitig geschlossenen, druckbefüllten und an einen Druckspeicher angeschlossenen Schlauch (22, 31) ausgebildet ist.

10. Strebausrüstung nach einem der Ansprüche 1 bis 8, **dadurch gekennzeichnet, dass** die Schlauchwaage (21, 30) als einseitig offene Schlauchwaage mit einem an einen den höchsten Punkt der Schlauchwaage bildenden Überlauf angeschlossenen Schlauch (22, 31) ausgebildet ist.

11. Strebausrüstung nach einem der Ansprüche 1 bis 10, **dadurch gekennzeichnet, dass** der am zugeordneten Ende des Schlauches (22) angeordnete Drucksensor (23) ein Absolutdrucksensor ist.

12. Strebausrüstung nach einem der Ansprüche 1 bis 11, **dadurch gekennzeichnet, dass** sowohl am strebfördererseitigen wie auch am hangendkappenseitigen Ende des Schlauches (22) jeweils ein Drucksensor (23, 24) angeordnet ist.

13. Strebausrüstung nach Anspruch 12, **dadurch gekennzeichnet, dass** der am hangendkappenseitigen Ende des Schlauches (22) angeordnete Drucksensor (24) ein Absolutdrucksensor ist.

14. Strebausrüstung nach einem der Ansprüche 1 bis 13, **dadurch gekennzeichnet, dass** die jeweils an den beiden Enden des Schlauches (22, 31) angeordneten Drucksensoren (23, 24, 28) jeweils den Atmosphärendruck gegen den Flüssigkeitsdruck messende Relativdrucksensoren sind.

15. Strebausrüstung nach einem der Ansprüche 1 bis 14, **dadurch gekennzeichnet, dass** der zwischen Strebförderer (17) und Schildausbaugestell (10) verlaufende Schlauch (22) von einer Rückholfeder beaufschlagt ist.

16. Strebausrüstung nach einem der Ansprüche 1 bis 15, **dadurch gekennzeichnet, dass** eine am gleichen Bauteil des Schildausbaugestells (10) angeordnete Neigungsmessanordnung und Drucksensor jeweils in einem gemeinsamen Sensorgehäuse mit gemeinsamer Stromversorgung und Messleitungsanschluss angeordnet sind.

17. Strebausrüstung nach einem der Ansprüche 3 oder 6 bis 8, **dadurch gekennzeichnet, dass** an der Bodenkufe (11) des Schildausbaugestells (10) eine Neigungsmessanordnung (29) angeordnet ist.

18. Strebausrüstung nach einem der Ansprüche 1, 8 oder 16, **dadurch gekennzeichnet, dass** die Neigungsmessanordnung (25, 29, 26, 35, 36) aus zwei einaxialen Neigungssensoren besteht.

19. Strebausrüstung nach einem der Ansprüche 1, 8 oder 16, **dadurch gekennzeichnet, dass** die Neigungsmessanordnung (25, 29, 26, 35, 36) aus einem zweiaxialen Neigungssensor besteht.

20. Strebausrüstung nach einem der Ansprüche 1, 8 oder 16, **dadurch gekennzeichnet, dass** die Neigungsmessanordnung (25, 29, 26, 35, 36) aus einem dreiaxialen Neigungssensor besteht.

## Claims

1. A face equipment for mechanical extraction in longwall mining, in particular in the underground hard coal mining industry, comprising a face conveyor (17) arranged along the mining wall, an extraction means (18) that can be moved along the face conveyor (17), and shield support frames (10) supported on the face conveyor (17) at an angle thereto, **characterized in that**, in order to determine the height of the face opening in the area of the face conveyor (17), a flexible hose level (21) with a liquid-filled hose (22) placed between the face conveyor (17) and the roof canopy (13) of the shield support frame (10) is installed on individual shield support frames (10), and a pressure sensor (23, 24, 28) is arranged on at least one end of the hose (22), wherein, in addition to considering a longitudinal and/or transverse inclination of the face conveyor (17) and the shield support frame (10) during face height determination, an inclination measuring device (25, 26) that permits the measurement of at least two tilting axes against the horizontal is arranged on the face conveyor (17) and on the main component of the shield support frame (10) exhibiting the end of the flexible hose level, and the pressure sensor (23, 24, 28) and inclination measuring devices (25, 26) are connected to an analyzing and control unit.

2. The face equipment according to claim 1, **characterized in that** the hose (22) of the flexible hose level (21) is guided from the face conveyor (17) directly to the roof canopy (13).

3. The face equipment according to claim 2, **characterized in that** the hose (22) running between the face conveyor (17) and roof canopy (13) of the shield support frame (10) extends beyond a pressure sensor (24) secured to the roof canopy-side end of the hose (22) up until the floor skid (11) of the shield support frame (10), and that a pressure sensor (28) is situated on the end of the hose (22) attached to the floor skid (11).

4. The face equipment according to claim 1, **characterized in that** the hose (22) of the flexible hose level (21) is guided from the face conveyor (17) via the floor skid (11) of the shield support frame (10) and along its other components up until the roof canopy (13).

5. The face equipment according to claim 4, **characterized in that** a pressure sensor (28) is incorporated in the course of the hose (22) between the face conveyor (17) and roof canopy (13) in the area of the floor skid (11) of the shield support frame (10).

6. The face equipment according to claim 1, **characterized in that** a respective flexible hose level (21, 30) with a liquid-filled hose (22, 31) and pressure sensors (23, 28; 32, 24) arranged at both of its ends is situated between the face conveyor (17) and the floor skid (11) of the shield support frame (10) on the one hand, and between the floor skid (11) and the roof canopy (13) of the shield support frame (10) on the other, wherein the floor skid-side pressure sensor (28) of the hose (22) running between the face conveyor (17) and floor skid (11) and the floor skid-side pressure sensor (32) of the hose (31) running between the floor skid (11) and the roof canopy (13) of the shield support frame (10) form an equipotential coupling point.

7. The face equipment according to claim 1, **characterized in that** a respective flexible hose level with a liquid-filled hose and pressure sensors arranged at both of its ends is situated between the face conveyor (17) and the roof canopy (13) of the shield support frame (10) on the one hand, and between the roof canopy (13) and the floor skid (11) of the shield support frame (10) on the other, wherein the roof canopy-side pressure sensor of the hose running between the face conveyor and roof canopy and the roof canopy-side pressure sensor of the hose running between the roof canopy and the floor skid of the shield support frame form an equipotential coupling point.

8. A face equipment for mechanical extraction in longwall mining, in particular in the underground hard coal mining industry, comprising a face conveyor (17) arranged along the mining wall, an extraction means (18) that can be moved along the face conveyor (17), and shield support frames (10) supported on the face conveyor (17) at an angle thereto, **characterized in that** in order to determine the height of the face opening in the area of the face conveyor (17) a flexible hose level (21) is placed on single shield support frames (10) the hose (22) of which extends between the face conveyor (17) and the floor skid (11) of the shield support frame (10) and a pressure sensor (23, 28) is arranged on at least one end of the hose (22) and that inclination measuring devices (29, 35, 36, 26) are arranged on at least three of the four primary components of each shield support frame (10), such as the floor skid (11), gob shield (14), support connection rods (16) and roof canopy (13), so as to determine the respective inclination of the primary component against the horizontal as the basis for calculating the height perpendicular to the stratification for the shield support frame (10) on the front end of the roof canopy (13) by comparing the measured data with the base data that are stored in the analyzing and control unit and define the geometric orientation of the components and their movement while advancing wherein, in addition to considering a longitudinal and/or transverse inclination of the face conveyor (17) and the shield support frame (10) during face height determination, an inclination measuring device (25, 29) that permits the measurement of at least two tilting axes against the horizontal is arranged on the face conveyor (17) and on the main component of the shield support frame (10) exhibiting the end of the flexible hose level, and the pressure sensor (23, 28) and inclination measuring devices (25, 29) are connected to an analyzing and control unit.

9. The face equipment according to one of claims 1 to 8, **characterized in that** the flexible hose level (21, 30) is designed as a closed flexible hose level with a pressure-filled hose (22, 31) that is closed on both sides and connected to a pressure accumulator.

10. The face equipment according to one of claims 1 to 8, **characterized in that** the flexible hose level (21, 30) is designed as a flexible hose level open on one side, with a hose (22, 31) connected to an overflow forming the highest point of the flexible hose level.

11. The face equipment according to one of claims 1 to 10, **characterized in that** the pressure sensor (23) arranged on the skid-side end of the hose (22) is an absolute pressure sensor.

12. The face equipment according to one of claims 1 to 11, **characterized in that** a pressure sensor (23, 24) is situated both on the face conveyor-side and roof canopy-side end of the hose (22).

13. The face equipment according to claim 12, **characterized in that** the pressure sensor (24) situated on the roof canopy-side end of the hose (22) is an absolute pressure sensor.

14. The face equipment according to one of claims 1 to 13, **characterized in that** the respective pressure sensors (23, 24, 28) arranged on the two ends of the hose (22, 31) each are relative pressure sensors that measure the atmospheric pressure against the fluid pressure.

15. The face equipment according to one of claims 1 to 14, **characterized in that** the hose (22) running between the face conveyor (17) and shield support frame (10) is exposed to the force of a retaining spring.

16. The face equipment according to one of claims 1 to 15, **characterized in that** an inclination measuring device located on the same component of the shield support frame (10) and a pressure sensor each are arranged in a shared sensor housing with shared power supply and measuring line connector.

17. The face equipment according to one of claims 3 or 6 to 8, **characterized in that** an inclination measuring device (29) is situated on the floor skid (11) of the shield support frame (10).

18. The face equipment according to one of claims 1, 8 or 16, **characterized in that** the inclination measuring device (25, 29, 26, 35, 36) consists of two uniaxial inclination sensors.

19. The face equipment according to one of claims 1, 8 or 17, **characterized in that** the inclination measuring device (25, 29, 26, 35, 36) consists of a biaxial inclination sensor.

20. The face equipment according to one of claims 1, 8 or 16, **characterized in that** the inclination measuring device (25, 29, 26, 35, 36) consists of a triaxial inclination sensor.

**Revendications**

1. Equipement de taille pour l'exploitation mécanisée dans l'exploitation par tailles chassantes, notamment dans les mines de houille souterraines, avec un convoyeur de taille (17) disposé le long du front de taille, un moyen d'extraction (18) mobile le long du convoyeur de taille (17) et avec des éléments de soutènement par bouclier (10) apposés à celui-ci à angle droit du convoyeur de taille (17), **caractérisé en ce que** pour déterminer la hauteur de l'ouverture de taille dans la zone du convoyeur de taille (17), un niveau à eau (21) posé entre le convoyeur de taille (17) et le chapeau (13) de l'élément de soutènement par bouclier (10) avec un flexible rempli de liquide (22) est posé sur les éléments de soutènement par bouclier individuels (10) et un capteur de pression (23, 24, 28) est disposé sur au moins une extrémité du flexible (22), un dispositif de mesure d'inclinaison (25, 26) permettant la mesure d'au moins deux axes de basculement par rapport à l'horizontale étant respectivement disposé en plus sur le convoyeur de taille (17) pour la prise en compte d'une inclinaison longitudinale et/ou transversale du convoyeur de taille (17) et de l'élément de soutènement par bouclier (10) lors de la détermination de la hauteur de taille et sur le chapeau (13) de l'élément de soutènement par bouclier (10) comportant l'extrémité du niveau à eau et un capteur de pression (23, 24, 28) et des dispositifs d'inclinaison (25,26) étant reliés à une unité d'exploitation et de commande.

2. Equipement de taille selon la revendication 1, **caractérisé en ce que** le flexible (22) du niveau à eau (21) est guidé depuis le convoyeur de taille (17) directement au chapeau (13).

3. Equipement de taille selon la revendication 2, **caractérisé en ce que** le flexible (22) passant entre le convoyeur de taille (17) et le chapeau (13) de l'élément de soutènement par bouclier (10) s'étend sur un capteur de pression (24) monté à une extrémité du flexible (22) côté chapeau jusqu'au patin de sol (11) de l'élément de soutènement par bouclier (10) et un capteur de pression (28) est disposé à l'extrémité du flexible (22) fixée au patin de sol (11).

4. Equipement de taille selon la revendication 1, **caractérisé en ce que** le flexible (22) du niveau à eau (21) est guidé du convoyeur de taille (17) sur le patin de sol (11) de l'élément de soutènement par bouclier (10) et le long de ses autres composants jusqu'au chapeau(13).

5. Equipement de taille selon la revendication 4, **caractérisé en ce qu'**un capteur de pression (28) est connecté dans le parcours du flexible (22) entre le convoyeur de taille (17) et le chapeau (13) dans la zone du patin de sol (11) de l'élément de soutènement par bouclier (10).

6. Equipement de taille selon la revendication 1, **caractérisé en ce qu'**entre le convoyeur de taille (17) et le patin de sol (11) de l'élément de soutènement par bouclier (10) d'une part et entre le patin de sol (11) et le chapeau (13) de l'élément de soutènement par bouclier (10) d'autre part sont respectivement disposés un niveau à eau (21,30) avec un flexible rempli de liquide (22, 31) et des capteurs de pression (23, 28 ;32, 24) aux deux extrémités de celui-ci, le capteur de pression (28) du côté patin de sol du flexible (22) passant entre le convoyeur de taille (17) et le patin de sol (11) et le capteur de pression (32) du côté patin de sol du flexible (31) passant entre le patin de sol (11) et le chapeau (13) de l'élément de soutènement par bouclier (10) formant un point de couplage à même hauteur.

7. Equipement de taille selon la revendication 1, **caractérisé en ce qu'**entre le convoyeur de taille (17) et le chapeau (13) de l'élément de soutènement par bouclier (10) d'une part et entre le chapeau (13) et le patin de sol (11) de l'élément de soutènement par bouclier (10) d'autre part sont respectivement disposés un niveau à eau avec un flexible rempli de liquide et des capteurs de pression aux deux extrémités de celui-ci, le capteur de pression du côté du chapeau du flexible passant entre le convoyeur de taille et le chapeau et le capteur de pression du côté du chapeau du flexible passant entre le chapeau et le patin de sol de l'élément de soutènement par bouclier formant un point de couplage à même hauteur.

8. Equipement de taille pour l'extraction mécanisée dans l'exploitation par tailles chassantes, notamment dans les mines de houille souterraines, avec un convoyeur de taille (17) disposé le long du front de taille, un moyen d'extraction (18) mobile le long du convoyeur de taille (17) et avec des éléments de soutènement par bouclier (10) apposés à celui-ci à angle droit du convoyeur de taille (17), **caractérisé en ce que** pour déterminer la hauteur de l'ouverture de taille dans la zone du convoyeur de taille (17) un niveau à eau (21) est disposé sur les éléments individuels de soutènement par bouclier (10), dont le flexible (22) s'étend entre le convoyeur de taille (17) et le patin de sol (11) de l'élément de soutènement par bouclier (10) et un capteur de pression (23, 28) est disposé sur au moins une extrémité du flexible (22) et **en ce que** sur au moins trois des quatre composants principaux de chaque élément de soutènement par bouclier (10) comme le patin de sol (11), le bouclier de rupture (14), les bras de support (16) et le chapeau (13) sont disposés des dispositifs de mesure d'inclinaison (29, 35, 36, 26) destinés à saisir l'inclinaison respective du composant principal par rapport à l'horizontale en tant que base d'un calcul de la hauteur perpendiculaire à la stratification de l'élément de soutènement par bouclier (10) sur l'extrémité avant du chapeau (13) par comparaison des données de mesure avec les données de base mémorisées dans l'unité d'exploitation et de commande, définissant l'orientation géométrique des composants et le mouvement de ceux-ci pendant le déplacement, un dispositif d'inclinaison (25, 29) permettant la mesure d'au moins deux axes d'inclinaison par rapport à l'horizontale étant respectivement disposé en plus sur le convoyeur de taille (17) pour la prise en compte d'une inclinaison longitudinale et/ou transversale du convoyeur de taille (17) et de l'élément de soutènement par bouclier (10) lors de la détermination de la hauteur de taille et sur le patin de sol (11) de l'élément de soutènement par bouclier (10) comportant l'extrémité du niveau à eau et un capteur de pression (23,28) et des dispositifs d'inclinaison (25,29) étant reliés à une unité d'exploitation et de commande.

9. Equipement de taille selon l'une quelconque des revendications 1 à 8, **caractérisé en ce que** le niveau à eau (21, 30) est constitué comme niveau à eau fermé avec un flexible (22, 31) fermé aux deux extrémités, rempli de pression et raccordé à un réservoir sous pression.

10. Equipement de taille selon l'une quelconque des revendications 1 à 8, **caractérisé en ce que** le niveau à eau (21, 30) est constitué comme niveau à eau ouvert d'un côté avec un flexible (22, 31) raccordé à un trop-plein formant sur un point le point le plus haut du niveau à haut.

11. Equipement de taille selon l'une quelconque des revendications 1 à 10, **caractérisé en ce que** le capteur de pression (23) disposé à l'extrémité attribuée du flexible (22) est un capteur de pression absolue.

12. Equipement de taille selon l'une quelconque des revendications 1 à 11, **caractérisé en ce qu'**un capteur de pression (23, 24) est respectivement disposé aussi bien à l'extrémité côté convoyeur de taille que du côté chapeau du flexible (22).

13. Equipement de taille selon la revendication 12, **caractérisé en ce que** le capteur de pression (24) disposé à l'extrémité côté chapeau du flexible (22) est un capteur de pression absolue.

14. Equipement de taille selon l'une quelconque des revendications 1 à 13, **caractérisé en ce que** les capteurs de pression (23, 24, 28) respectivement disposés aux deux extrémités du flexible (22, 31) sont des capteurs de pression relative mesurant respectivement la pression atmosphérique par rapport à la pression du liquide.

15. Equipement de taille selon l'une quelconque des revendications 1 à 14, **caractérisé en ce que** le flexible (22) passant entre le convoyeur de taille (17) et l'élément de soutènement par bouclier (10) est sollicité par un ressort de rappel.

16. Equipement de taille selon l'une quelconque des revendications 1 à 15, **caractérisé en ce qu'**un dispositif de mesure d'inclinaison et un capteur de pression disposés sur le même composant de l'élément de soutènement par bouclier (10) sont respectivement disposés dans un boîtier de capteur commun avec une alimentation en courant et une prise de ligne de mesure communes.

17. Equipement de taille selon l'une quelconque des revendications 3 ou 6 à 8, **caractérisé en ce qu'**un dispositif de mesure d'inclinaison (29) est disposé sur le patin de sol (11) de l'élément de soutènement par bouclier (10).

18. Equipement de taille selon l'une quelconque des revendications 1, 8 ou 16 **caractérisé en ce que** le dispositif de mesure d'inclinaison (25, 29, 26, 35, 36) est composé de deux capteurs monoaxiaux.

19. Equipement de taille selon l'une quelconque des revendications 1, 8 ou 16, **caractérisé en ce que** le dispositif de mesure d'inclinaison (25, 29, 26, 35, 36) est composé d'un capteur d'inclinaison biaxial.

20. Equipement de taille selon l'une quelconque des revendications 1, 8 ou 16, **caractérisé en ce que** le dispositif de mesure d'inclinaison (25, 29, 26, 35, 36) est composé d'un capteur d'inclinaison triaxial.

## Fig 1a

## Fig 1b

**Fig 2**

**Fig 3**

**Fig 4**

**Fig 5**

**EP 2 834 465 B1**

**IN DER BESCHREIBUNG AUFGEFÜHRTE DOKUMENTE**

**In der Beschreibung aufgeführte Patentdokumente**

- WO 2009103303 A
- DE 4333032 C2
- WO 2012089230 A1
- WO 2009103303 A1